# EUROPEAN PATENT SPECIFICATION

(11) **EP 1 649 824 B1**
(45) Date of publication and mention of the grant of the patent: **05.09.2012**
(21) Application number: 03780180.0
(22) Date of filing: 15.12.2003
(51) Int. Cl.: A61C 7/12, A61C 7/00

(54) **Auxiliary element for the segmental distalization of the canine-to-molar posterior maxillary area in orthodontic treatments**
Hilfselement für die segmentale Distalisierung des hinteren Oberkieferbereichs von Eck- zu Backenzahn in orthodontischen Behandlungen
Element auxiliaire de positionnement distal segmentaire du secteur posterieur maxillaire des canines aux molaires dans les traitements orthodontiques

(30) Priority: 25.07.2003 ES 200301758
(43) Date of publication of application: 26.04.2006
(73) Proprietor: Orthodontic Research and Development, S.L., 08017 Barcelona (ES)
(72) Inventor: CARRIERE LLUCH, Luis, 08017 Barcelona (ES)
(74) Representative: ZBM Patents
(86) International application number: PCT/ES2003/000631
(87) International publication number: WO 2005/013844

(56) References cited:
- EP-A1- 0 931 518
- WO-A2-03/028575
- US-A- 4 483 674
- US-A- 5 299 935
- US-A- 5 873 715

## Description

The present invention is aimed at an auxiliary element for the segmental distalisation of the canine-to-molar posterior maxillary area in orthodontic treatments the closest state of the art is ES 2188399.

The present improvements are the fruit of the experience acquired in the implementation of the main patent and its first application of addition and enable the means required to achieve a better articulation between the mesial segment and the distal segment to be considerably simplified while allowing the two elements to be connected merely by pressure and allowing free rotation within a large sector of the ball joint within its recess in the distal segment and similarly allowing sufficient play in the lateral rotation and on the axis of the mesial arm for adjustment of the mesial segment to the distal segment.

The objectives of the invention are achieved by the formation of the ball joint with a spherical form with two opposed flat polar caps of significant dimensions and with the arm of the mesial segment inclined at an acute angle to the plane of symmetry of the ball joint. The recess in the distal segment has a form which partially mates with that of the ball joint, with semi-closed edges at the mouth to allow retention of the ball joint merely by pressure within the recess and with a dimension between faces which is somewhat greater than that of the ball joint to allow the lateral play of the mesial segment at the desired angle.

To assist comprehension, drawings of an embodiment of a distalisation arrangement according to the present invention are attached as non-limiting examples.
Fig. is a section of a detail of the articulation of the median segment and the distal segment.
Fig. 2 is a section through the indicated sectional plane.

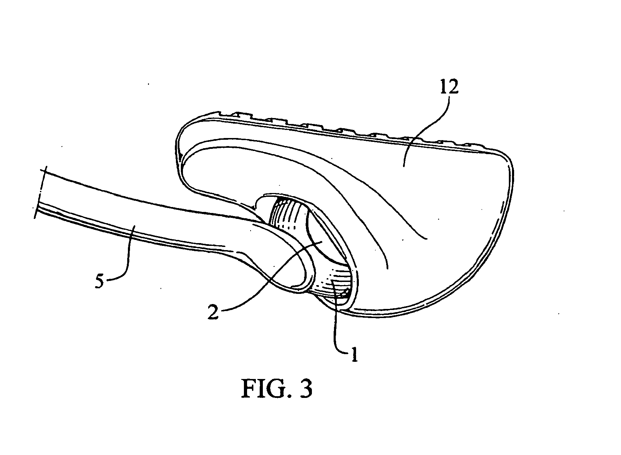

Fig. 3 is a perspective view of the articulation shown in Fig. 1 and 2.

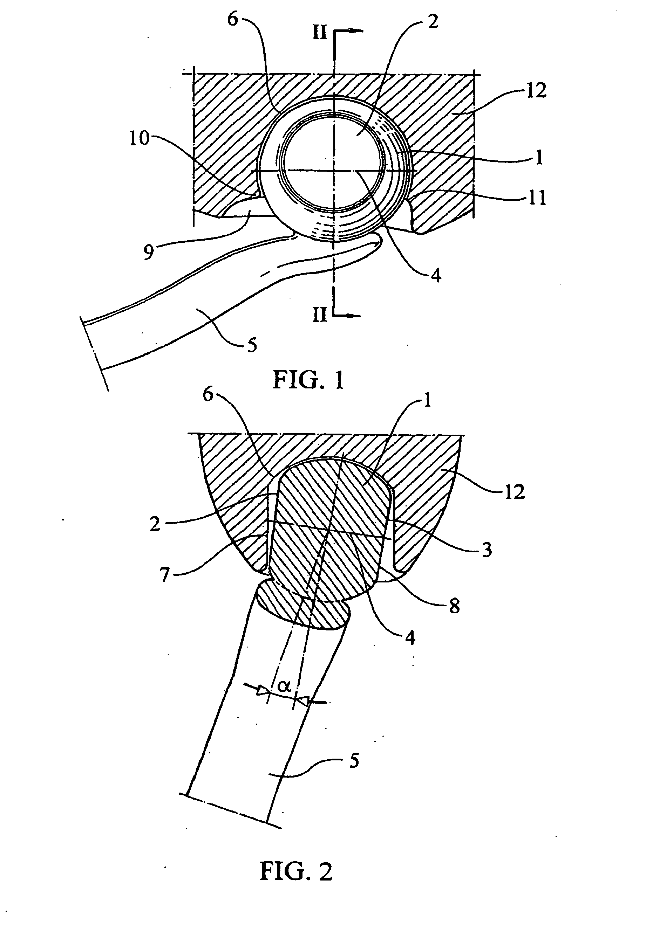

Referring to the figures, the present invention resides in forming the ball joint 1 with a curved surface shape, preferably as a sphere with diametrically opposed planar polar segments 2 and 3 forming respective planar faces which are perpendicular to a diameter 4 of the spherical surface. The remainder of the surface of the segment is curved, preferably spherical. The mesial arm 5 is joined to the ball joint 1, forming a small angle to the plane of symmetry thereof, this angle being indicated by the letter α in Fig. 2.

The recess produced in the distal segment 12 has a shape which substantially mates with a portion of the ball joint, with a lateral surplus which allows lateral play and play with respect to the axis of the mesial arm for adjustment of the median arm 5. This is illustrated in the figures, which show that the cavity 6 of the distal end has a concave bottom surface of spherical shape with identical sphericity to the ball joint 1 and has parallel lateral faces 7 and 8 which are mutually separated preferably by a distance greater than the width of the ball joint 1, in other words, greater than the distance between the faces 2 and 3 of said ball joint. Said recess 6 also comprises, in its inlet orifice 9, an aperture determined by the edges 10 and 11 which is narrower than the diameter of the ball joint 1 in its spherical portion to allow fitting of the ball joint in the interior of the recess intended therefor by means of a specific pressure which will cause sufficient deformation for the admission of the ball joint and which will not allow the free escape thereof.

The present improvements over ES2188399 therefore simplify production of the distalisation element by eliminating the arrangement of transverse axes and allowing easy fitting of the mesial segment and sufficient rotation thereof for the correct fitting thereof.

## Claims

1. Auxiliary element for the segmental distalisation of the canine-to-molar posterior maxillary area in orthodontic treatments, which comprises a mesial segment (5) and a distal segment (12) articulated by the combination of a ball joint (1) formed in one end of the mesial segment within a recess (2) of the distal segment (12) **characterised in that** the ball joint (1) of the mesial segment (5) spherical with two diametrically opposed planar faces in the position of polar segments of the sphere.

2. Auxiliary element according to claim 1, **characterised in that** the arm of the mesial segment is joined to the ball joint, forming a small acute angle.

3. Auxiliary element according to claim 1, **characterised in that** the recess of the distal segment intended to receive the ball joint has a form which partially mates with that of the ball joint, with a width between faces which is somewhat greater than the width between the faces of the ball joint so as to allow the lateral play thereof and play on the axis of the mesial arm and with a dimension of the inlet orifice of said recess smaller than the diameter of the ball joint so as to allow the ball joint to be pressed in and to prevent the subsequent accidental egress thereof.

## Patentansprüche

1. Vorrichtung für die segmentale Distalisation im hinteren Oberkieferbereich zwischen Eck- und Backenzähnen bei kieferorthopädischen Behandlungen, bestehend aus einem mesialen Segment (5) und einem distalen Segment (12), die durch die Kombination eines Kugelgelenks (1) ausgebildet an einem Ende des mesialen Segments (5) in einer Vertiefung (6) im distalen Segment (12) beweglich miteinander verbunden sind, **dadurch gekennzeichnet, dass** das Kugelgelenk (1) des mesialen Segments (5) kugelförmig ist und zwei diametral gegenüberliegende planare Flächen im Bereich der polaren Segmente der Kugel aufweist.

2. Vorrichtung nach Anspruch 1, **dadurch gekennzeichnet, dass** der Arm des mesialen Segments so mit dem Kugelgelenk verbunden ist, dass ein kleiner spitzer Winkel gebildet wird.

3. Vorrichtung nach Anspruch 1, **dadurch gekennzeichnet, dass** die Vertiefung des distalen Segments, die dafür vorgesehen ist, das Kugelgelenk aufzunehmen, eine Form hat, die teilweise an die Form des Kugelgelenks angepasst ist, wobei ein Abstand zwischen den Flächen geringfügig größer ist, als der Abstand zwischen den Flächen des Kugelgelenks, sodass sowohl ein seitliches Spiel als auch ein Spiel auf der Achse des mesialen Arms vorhanden sind, und wobei die Abmessungen der Eingangsöffnung der Vertiefung kleiner sind als der Durchmesser des Kugelgelenks, wodurch das Kugelgelenk gedrückt werden kann und ein nachfolgendes, unbeabsichtigtes Herausgleiten vermieden wird.

## Revendications

1. Élément auxiliaire pour la distalisation segmentaire de la région maxillaire postérieure canine-molaire dans des traitements orthodontiques, lequel comprend un segment mésial (5) et un segment distal (12) articulé par la combinaison d'une articulation (1) à rotule formée dans une extrémité du segment mésial dans un renfoncement du segment distal (12), **caractérisé en ce que** l'articulation (1) à rotule du segment mésial (5) est de forme sphérique et possède deux surfaces planes diamétralement opposées sur des segments polaires de la sphère.

2. Élément auxiliaire selon la revendication 1, **caractérisé en ce que** le bras du segment mésial est joint à l'articulation à rotule, en formant un petit angle aigu.

3. Élément auxiliaire selon la revendication 1, **caractérisé en ce que** le renfoncement du segment distal destiné à recevoir l'articulation à rotule a une forme qui s'accouple partialement à celle de l'articulation à rotule, avec une largeur entre surfaces qui est quelque peu plus grande que la largeur entre les surfaces de l'articulation à rotule afin de permettre le jeu latéral de celle-ci et du jeu sur l'axe du bras mésial et ayant une dimension de l'orifice de réception dudit enfoncement plus petit que le diamètre de l'articulation de rotule afin de permettre à l'articulation de rotule d'être pressée et d'éviter la sortie ultérieure accidentelle de celle-ci.
